# EUROPÄISCHE PATENTSCHRIFT

(11) **EP 2 771 922 B1**
(45) Veröffentlichungstag und Bekanntmachung des Hinweises auf die Patenterteilung: **10.01.2018**
(21) Anmeldenummer: 13789004.2
(22) Anmeldetag: 08.11.2013
(51) Int. Cl.: H01M 2/02, H01M 10/04, H01M 10/0587, H01M 10/0525

(54) **KNOPFZELLE MIT ELEKTRODENWICKEL**
BUTTON CELLS COMPRISING A WOUND ELECTRODE ASSEMBLY
PILES BOUTONS COMPRENANT UN ENSEMBLE D'ÉLECTRODES ENROULÉES

(30) Priorität: 09.11.2012 EP 12192064
(43) Veröffentlichungstag der Anmeldung: 03.09.2014
(73) Patentinhaber: VARTA Microbattery GmbH, 73479 Ellwangen (DE)
(72) Erfinder: ENSLING, David, 73479 Ellwangen (DE); PYTLIK, Edward, 73479 Ellwangen (DE); ERNSPERGER, Jürgen, 73491 Neuler (DE); GAUGLER, Winfried, 73479 Ellwangen-Eigenzell (DE); HÄUSSLER, Berthold, 73441 Bopfingen-Aufhausen (DE); FISCHER, Claus-Christian, 73479 Ellwangen-Rotenbach (DE)
(74) Vertreter: Patentanwaltskanzlei Cartagena
(86) Internationale Anmeldenummer: PCT/EP2013/073453
(87) Internationale Veröffentlichungsnummer: WO 2014/072494

(56) Entgegenhaltungen:
- EP-A2- 1 079 454
- WO-A2-2010/146154
- US-A1- 2003 013 007

## Beschreibung

Die vorliegende Erfindung betrifft Knopfzellen, die ein zylindrisches, flüssigkeitsdicht verschlossenes Gehäuse mit einer ebenen Gehäuseunterseite, einer dazu parallelen ebenen Gehäuseoberseite und einem dazwischen liegenden umlaufenden Gehäusemantel aufweisen, sowie innerhalb des Gehäuses einen wickelförmigen Verbund aus mindestens einer bandförmigen positiven, mindestens einer bandförmigen negativen Elektrode und mindestens einem bandförmigen Separator.

Knopfzellen weisen üblicherweise ein Gehäuse aus zwei Gehäusehalbteilen, einem sogenannten Zellenbecher und einem sogenannten Zellendeckel, auf. Definitionsgemäß ist der Zellenbecher positiv und der Zellendeckel negativ gepolt. Klassisch werden diese Halbteile häufig aus vernickeltem Tiefziehblech als Stanzziehteile hergestellt. In dem Gehäuse können die verschiedensten elektrochemischen Systeme enthalten sein, beispielsweise Zink/Braunstein, primäre und sekundäre Lithium-Ionen-Systeme oder sekundäre Systeme wie Nickel/Cadmium oder Nickel/Metallhydrid.

Der flüssigkeitsdichte Verschluss von Knopfzellen erfolgt klassisch durch Umbördeln des Randes des Zellenbechers über den Rand des Zellendeckels unter Einsatz eines Kunststoffrings, der zwischen Zellenbecher und Zellendeckel angeordnet wird und der gleichzeitig als Dichtungselement sowie zur elektrischen Isolierung des Zellenbechers und des Zellendeckels dient. Derartige Knopfzellen sind beispielsweise in der DE 31 13 309 A1 beschrieben.

Insbesondere Knopfzellen, die ein Lithium-Ionen-System beinhalten, weisen häufig einen wickelförmigen Verbund aus mindestens einer bandförmigen positiven, mindestens einer bandförmigen negativen Elektrode und mindestens einem bandförmigen Separator auf. Knopfzellen mit einem Elektroden-Separator-Wickel sind beispielsweise aus der WO 2010/146154 A2 und aus der EP 1079454 A2 bekannt. Allerdings weisen die Wickel eine unterschiedliche Orientierung auf. Die in der WO 2010/146154 A2 beschriebenen Wickel sind innerhalb des sie umgebenden Gehäuses axial ausgerichtet, so dass ihre Stirnseiten an den flachen Gehäuseober- und Gehäuseunterseiten anliegen. Bei dem in der EP 1079454 A2 beschriebenen Wickel weisen die Stirnseiten hingegen in Richtung der umlaufenden Seitenwand.

Bei Knopfzellen, die einen Elektroden-Separator-Wickel aufweisen, sind die Elektroden in der Regel über metallische Stromableiter mit den Elektroden verbunden, wobei die Stromableiter meist an die Gehäusehalbteile angeschweißt sind. Ein Beispiel einer Knopfzelle, bei der die Stromableiter mittels eines Lasers an die Gehäusehalbteile angeschweißt sind, ist in der WO 2010/146154 A2 beschrieben.

Häufig bereitet die Kontaktierung der Gehäusehalbteile allerdings Schwierigkeiten oder ist sehr aufwendig. Im Falle eines Lithium-Ionen-Systems (welches in der Regel eine Spannung zwischen 2,5 und 4,2 Volt liefert), spielt oft auch die Beschaffenheit des Gehäuses eine große Rolle. Klassische Stahlgehäuse werden insbesondere kathodenseitig den Anforderungen in Bezug auf dauerhafte elektrochemische Stabilität oft nicht gerecht, insbesondere an Kontaktstellen mit den Stromableitern. In der Folge kann es innerhalb des Zellgehäuses zu Korrosion und Gasungsphänomenen kommen, die die Zelle irreversibel schädigen können.

Knopfzellen auf Lithium-Ionen-Basis mit einem Gehäuse umfassend einen Knopfzellendeckel aus Aluminium und einen Knopfzellenbecher aus Stahl sind aus der US 2003/0013007 A1 bekannt.

Der vorliegenden Erfindung lag die Aufgabe zugrunde, Knopfzellen bereit zu stellen, die besser an die beschriebenen Anforderungen angepasst sind als herkömmliche Knopfzellen.

Diese Aufgabe wird gelöst durch die Knopfzelle mit den Merkmalen des Anspruchs 1. Bevorzugte Ausführungsformen der erfindungsgemäßen Knopfzelle sind in den abhängigen Ansprüchen 2 bis 13 angegeben. Der Wortlaut sämtlicher Ansprüche wird hiermit durch Bezugnahme zum Inhalt der vorliegenden Beschreibung gemacht.

Wie die erwähnten klassischen Knopfzellen umfasst auch die erfindungsgemäße Knopfzelle stets zwei metallische Gehäusehalbteile (ein positiv gepoltes und ein negativ gepoltes Gehäusehalbteil), die mittels einer elektrisch isolierenden Dichtung voneinander getrennt sind und mit dieser ein zylindrisches, flüssigkeitsdicht verschlossenes Gehäuse ausbilden. Dieses weist in der Regel eine ebene Gehäuseober- und eine dazu parallele ebene Gehäuseunterseite auf sowie einen dazwischen liegenden umlaufenden Gehäusemantel. Die ebene Ober- und die ebene Unterseite weisen üblicherweise eine kreisrunde oder ovale Form auf.

Innerhalb des Gehäuses befindet sich ein Verbund aus mindestens einer bandförmigen positiven Elektrode, mindestens einer bandförmigen negativen Elektrode und mindestens einem bandförmigen Separator. Die mindestens eine positive Elektrode umfasst einen ersten bandförmigen Stromkollektor, der von elektrochemischem Aktivmaterial bedeckt ist und über einen ersten metallischen Stromableiter mit dem positiv gepolten Gehäusehalbteil elektrisch verbunden ist. Die mindestens eine negative Elektrode umfasst einen zweiten bandförmigen Stromkollektor, der von elektrochemischem Aktivmaterial bedeckt ist und über einen zweiten metallischen Stromableiter mit dem negativ gepolten Gehäusehalbteil elektrisch verbunden ist.

Bei den Stromkollektoren handelt es sich meist um flächige Substrate, beispielsweise eine Metallfolie oder ein metallisches Netz oder Gitter, das ein oder beidseitig von elektrochemischem Aktivmaterial bedeckt ist. Als elektrochemisches Aktivmaterial wird dabei ein Material bezeichnet, das sich bei Lade- und/oder Entladevorgängen chemisch ändert, insbesondere durch Aufnahme oder Abgabe von Ionen. Alternativ können die Stromkollektoren auch in Form dünner Metallfäden oder metallbeschichteter Fäden vorliegen, die in eine Matrix aus dem elektrochemischen Aktivmaterial eingebettet sind.

Bevorzugt handelt es sich bei der erfindungsgemäßen Knopfzelle um eine Lithiumlonen-Knopfzelle, also eine Knopfzelle, bei der bei Lade- und/oder Entladevorgängen Lithium-Ionen von der mindestens einen negativen zur mindestens einen positiven Elektrode bzw. umgekehrt von der mindestens einen positiven zur mindestens einen negativen Elektrode wandern. In diesem Fall besteht der Stromkollektor der mindestens einen positiven Elektrode meist aus Aluminium oder aus einer Aluminiumlegierung, der Stromkollektor der mindestens einen negativen Elektrode bevorzugt aus Kupfer oder aus einer Kupferlegierung. Als elektrochemische Aktivmaterialien kommen grundsätzlich sämtliche Materialien in Frage, die Lithium-Ionen aufnehmen und wieder abgeben können. Stand der Technik sind diesbezüglich für die negative Elektrode insbesondere Partikel auf Kohlenstoffbasis wie graphitischer Kohlenstoff oder zur Interkalation von Lithium befähigte nicht-graphitische Kohlenstoffmaterialien. Weiterhin können auch metallische und halbmetallische Materialien zum Einsatz kommen, die mit Lithium legierbar sind. So sind beispielsweise die Elemente Zinn, Antimon und Silizium in der Lage, mit Lithium intermetallische Phasen zu bilden. Für die positive Elektrode umfassen die zu diesem Zeitpunkt industriell verwendeten Aktivmaterialien vor allem Lithiumkobaltoxid (LiCoO₂), LiMn₂O₄-Spinell, Lithiumeisenphosphat (LiFe-PO₄) und Derivate wie beispielsweise LiNi_{1/3}Mn_{1/3}Co_{1/3}O₂ oder LiMnPO₄. Sämtliche elektrochemisch aktiven Materialien sind in der Regel in Partikelform in den Elektroden enthalten. Daneben weisen Elektroden häufig noch in partikulärer Form Leitfähigkeitsverbesserer, beispielsweise Ruß, auf. Die mechanische Festigkeit der Elektroden wird meist durch einen Elektrodenbinder gewährleistet, beispielsweise einem Binder auf Basis von Carboxymethylzellulose, Polyacrylat oder Polyvinylidenfluorid.

Im Gegensatz zu den Kollektoren sind der erste und der zweite metallische Stromableiter nicht mit elektrochemischem Aktivmaterial bedeckt. Im Entladebetrieb werden über den zweiten metallischen Stromableiter Elektronen, welche von dem zweiten Stromkollektor der mindestens einen negativen Elektrode gesammelt wurden, an das negativ gepolte Gehäusehalbteil weitergeleitet. Umgekehrt werden der mindestens einen negativen Elektrode im Ladebetrieb über den zweiten Stromableiter und den zweiten Stromkollektor Elektronen zugeführt.

Handelt es sich bei der erfindungsgemäßen Knopfzelle um eine Lithium-Ionen-Knopfzelle, so besteht der erste Stromableiter bevorzugt aus Aluminium oder aus einer Aluminiumlegierung, der zweite Stromkollektor bevorzugt aus Kupfer oder aus einer Kupferlegierung.

Der Verbund aus den Elektroden und dem mindestens einen Separator liegt in Form eines spiralförmigen Wickels vor, der zwei flache Stirnseiten sowie eine umlaufende Außenseite aufweist, während das positiv gepolte Gehäusehalbteil bevorzugt becherförmig ausgebildet ist und einen Becherboden, eine umlaufende Becherwand, einen Becherrand mit einer endständigen Schnittkante sowie eine von dem Becherrand definierte Becheröffnung aufweist.

Besonders zeichnet sich die erfindungsgemäße Knopfzelle dadurch aus, dass der Wickel in dem becherförmigen, positiv gepolten Gehäusehalbteil angeordnet ist, so dass eine der flachen Stirnseiten in Richtung des Becherbodens weist und seine umlaufende Außenseite an der umlaufenden Becherwand anliegt und die Außenseite mit der Becherwand eine Klemmzone ausbildet, in der der erste Stromableiter eingeklemmt ist.

Es besteht also eine wirksame elektrische Kontaktierung zwischen dem positiv gepolten Gehäusehalbteil und dem ersten Stromableiter, ohne dass es dafür einer Verschweißung des ersten Stromableiters mit dem positiv gepolten Gehäusehalbteil bedarf.

Besonders bevorzugt besteht das positiv gepolte Gehäusehalbteil aus Aluminium oder aus einer Aluminiumlegierung, ist also aus einem Blech aus Aluminium oder einer Aluminiumlegierung gefertigt. Weiterhin ist es besonders bevorzugt, dass das negativ gepolte Gehäusehalbteil aus Stahl- oder Eisen besteht bzw. aus Stahl- oder Eisenblech gefertigt ist.

Es ist weiterhin bevorzugt, dass der erste Stromableiter aus Aluminium oder aus einer Aluminiumlegierung besteht, gegebenenfalls aus der gleichen Legierung wie das positiv gepolte Gehäusehalbteil.

Es hat sich gezeigt, dass Zellen mit diesen Merkmalen eine sehr große elektrochemische Stabilität aufweisen, ohne dass dabei negative Seiteneffekte auftreten, beispielsweise eine höhere Undichtigkeitsrate. Verantwortlich hierfür ist zum einen die Kombination aus Halbteilen aus den genannten, gänzlich unterschiedlichen Werkstoffen. Klassische Knopfzellen, bei denen beide Gehäusehalbteile aus dem erwähnten vernickelten Edelstahl bestehen, zeichnen sich durch eine sehr hohe Dichtigkeit, häufig aber auch durch eine relativ geringe elektrochemische Stabilität aus. Die Kombination von Halbteilen aus Aluminium mit Edelstahl gewährleistet einen stabileren Zellenaufbau, da Aluminium als Werkstoff eine geringere mechanische Festigkeit und höhere Duktilität als Stahl aufweist und somit vermehrt mit Undichtigkeiten zu rechnen wäre. Zum anderen ist es auch sehr vorteilhaft, wenn ein Stromableiter aus dem gleichen Material besteht wie das damit verbundene Gehäusehalbteil, da es so nicht zur Ausbildung von Lokalelementen kommen kann.

Sofern das Gehäusehalbteil aus einer Aluminiumlegierung besteht, weist diese in der Regel mindestens 30 Gew.-%, bevorzugt mehr als 60 Gew.-%, besonders bevorzugt mehr als 90 Gew.-%, Aluminium auf. Dies gilt analog auch für die erwähnten Stromkollektoren und Stromableiter aus einer Aluminiumlegierung.

Bei dem Stahl handelt es sich bevorzugt um einen Edelstahl, insbesondere um einen rostfreien Edelstahl.

In bevorzugten Ausführungsformen ist das Stahl- oder Eisenblech auf der im Gebrauchszustand die Außenseite des Knopfzellengehäuses bildenden Seite des Stahl- oder Eisenblechs mit Nickel oder einer Nickellegierung beschichtet.

In weiteren bevorzugten Ausführungsformen ist das Stahl- oder Eisenblech auf der im Gebrauchszustand die Innenseite des Knopfzellengehäuses bildenden Seite des Stahl- oder Eisenblechs mit Kupfer oder einer Kupferlegierung, beispielsweise einer Kupfer-Zinn- oder Kupfer-Blei-Legierung, beschichtet.

Besonders bevorzugt weist das Stahl- oder Eisenblech sowohl die Beschichtung aus Nickel oder der Nickellegierung als auch die Beschichtung aus Kupfer oder aus der Kupferlegierung auf. In dieser Ausführungsform kann das Nickel das Gehäuse außenseitig vor Korrosion schützen während die Kupferbeschichtung auf der Innenseite elektrochemische Stabilität garantiert.

Der erste Stromableiter kann mit dem ersten bandförmigen Stromkollektor der mindestens einen positiven Elektrode durch Verschweißung verbunden sein. Beispielsweise kann ein Stromableiter senkrecht an das Kollektorband einer zu wickelnden bandförmigen Elektrode geschweißt werden, wie das in der WO 2010/146154 A2 beschrieben ist. Nach dem Wickeln ragt der Stromableiter stirnseitig aus dem resultierenden Wickel heraus und kann durch Umklappen auf der umlaufenden Außenseite des Wickels (und damit in der Klemmzone) abgelegt werden.

In besonders bevorzugten Ausführungsformen handelt es sich bei dem ersten Stromableiter allerdings um einen nicht von elektrochemischem Aktivmaterial bedeckten Teilabschnitt des ersten Stromkollektors, insbesondere um einen endständigen Abschnitt des ersten Stromkollektors. Im einfachsten Fall kann beispielsweise bei der Herstellung der positiven Elektrode ein Kollektorband zum Einsatz kommen, dessen Länge die Länge des herzustellenden Verbundes überschreitet. Dieses wird nicht über seine komplette Länge mit Aktivmaterial beschichtet, stattdessen bleibt ein Endstück unbeschichtet. Kombiniert man den mit Aktivmaterial beschichteten Kollektor mit einem Separator und einer Gegenelektrode passender Länge, so dass das unbeschichtete Endstück übersteht, und wickelt den entstandenen Verbund anschließend vom beschichteten Endstück aus auf, so erhält man einen Wickel, auf dessen Außenseite das unbeschichtete Endstück aufliegt. Dieses Endstück kann großflächig mit der umlaufenden Becherwand des positiv gepolten Gehäusehalbteils in Kontakt treten.

Der zweite metallische Stromableiter ist in bevorzugten Ausführungsformen der erfindungsgemäßen Knopfzelle mit dem negativ gepolten Gehäusehalbteil durch Verschweißung verbunden, beispielsweise wie die Stromableiter des in der WO 2010/146154 A2 beschriebenen Elektrodenwickels.

Bevorzugt ist auch das negativ gepolte Gehäusehalbteil becherförmig ausgebildet und weist einen Becherboden, eine umlaufende Becherwand, einen Becherrand mit einer endständigen Schnittkante und eine von dem Becherrand definierte Becheröffnung auf.

Sowohl der Boden des becherförmigen positiv gepolten Gehäusehalbteils als auch der Boden des becherförmigen negativ gepolten Gehäusehalbteils ist bevorzugt eben ausgebildet. Die Böden bilden gegebenenfalls die erwähnte ebene Gehäuseunter- oder Gehäuseoberseite des Knopfzellengehäuses aus und weisen entsprechend, wie bereits erwähnt, bevorzugt eine kreisrunde oder ovale Form auf. An die Böden schließt sich jeweils, in manchen Fällen über einen Schulterbereich, radial umlaufend die erwähnte Becherwand an. Bevorzugt ist diese orthogonal zu dem jeweiligen Boden ausgerichtet und weist üblicherweise eine zylindrische Geometrie auf. In einigen bevorzugten Ausführungsformen sind Innen- und Außenradius der Becherwand über die gesamte Wandhöhe im Wesentlichen konstant.

Bevorzugt ist der Durchmesser des becherförmigen Gehäusehalbteils aus Aluminium oder der Aluminiumlegierung kleiner als der Durchmesser des becherförmigen Gehäusehalbteils aus Stahl- oder Eisenblech, so dass es sich in letzteres mit dem Becherrand voran einschieben lässt. Vorzugsweise wird vor dem Einschieben auf die Außenseite der Becherwand des Gehäusehalbteils aus Aluminium oder der Aluminiumlegierung eine geeignete Dichtung aufgezogen.

Entsprechend ist es besonders bevorzugt, dass das positiv gepolte becherförmige Gehäusehalbteil mit dem Becherrand voran in das negativ gepolte becherförmige Gehäusehalbteil aus Stahl- oder Eisenblech eingeschoben ist.

Alternativ ist es auch möglich, dass das positiv gepolte Gehäusehalbteil die beschriebene Becherform aufweist, wohingegen das negativ gepolte Gehäusehalbteil als flacher Napf ausgebildet ist. Im Gegensatz zur Becherform zeichnet sich die diese Napfform durch das Fehlen einer Becherwand aus. Wie der Becher weist auch der Napf einen ebenen Boden auf, der gegebenenfalls die erwähnte ebene Gehäuseunter- oder Gehäuseoberseite des Knopfzellengehäuses ausbildet. An ihn schließt sich aber nicht etwa eine dazu orthogonal ausgerichtete Wand sondern unmittelbar ein radial umlaufender Rand mit einer endständigen Schnittkante an.

In diesem alternativen Fall ist es bevorzugt, dass das becherförmige positiv gepolte Gehäusehalbteil mit dem Becherrand voran auf dem Boden des napfförmigen negativ gepolten Gehäusehalbteils aufsitzt.

Bevorzugt besteht zwischen den beiden Gehäusehalbteilen des flüssigkeitsdicht verschlossenen Gehäuses eine formschlüssige Verbindung. Hierunter soll vorliegend verstanden werden, dass sich die beiden Gehäusehalbteile nicht voneinander trennen lassen ohne dass dabei mindestens eines der Gehäusehalbteile deformiert werden muss. Bevorzugt wird der Formschluss dadurch realisiert, dass der Rand des becher- oder napfförmigen Gehäusehalbteils aus Stahl- oder Eisenblech radial nach innen umgebogen oder eingezogen wird.

Liegen sowohl das positiv gepolte Gehäusehalbteil als auch das negativ gepolte Gehäusehalbteil becherförmig vor, so wird die formschlüssige Verbindung bevorzugt realisiert, indem das positiv gepolte Gehäusehalbteil mit dem Becherrand voran in das negativ gepolte Gehäusehalbteil eingeschoben wird und anschließend der Öffnungsrand des negativ gepolten Gehäusehalbteils so weit radial nach innen gedrückt oder eingezogen wird, bis der gewünschte Formschluss besteht. Diesen Vorgang bezeichnet man gewöhnlich als Bördelung.

Alternativ lässt sich eine formschlüssige Verbindung wie folgt realisieren: In einem ersten Schritt wird der Becherrand eines becherförmigen positiv gepolten Gehäusehalbteils radial nach außen umgebogen, insbesondere so, dass der umgebogene Rand einen Winkel von 90° zum Mantel einnimmt. Das so verformte Gehäusehalbteil weist im Ergebnis einen hutartigen Querschnitt auf, wobei der umgebogene Rand die Hutkrempe bildet. Mit der Krempe voran wird das Gehäusehalbteil anschließend mittig auf eine Scheibe aus Stahl- oder Eisenblech aufgesetzt, welche durch Umformung zu dem beschriebenen napfförmigen Gehäusehalbteil verarbeitet wird. Hierzu wird der Rand der Scheibe radial nach innen - über den umgebogenen Öffnungsrand des becherförmigen Gehäusehalbteils - umgeschlagen, so dass sich ein umlaufender Flansch ausbildet. In diesem wird der umgebogene Öffnungsrand des becherförmigen Gehäusehalbteils U-förmig von dem umgebogenen Rand des napfförmigen Gehäusehalbteils umschlossen. Vorzugsweise vor dem Aufsetzen auf die Scheibe wird auf den umgebogenen Öffnungsrand des becherförmigen Gehäusehalbteils eine geeignete Dichtung aufgezogen.

Als Dichtungen für erfindungsgemäße Knopfzellen eignen sich im Übrigen grundsätzlich sowohl klassische Spritzgussdichtungen als auch Foliendichtungen, deren Herstellung in der DE 196 47 593 A1 beschrieben ist.

In einigen bevorzugten Ausführungsformen kann das Gehäuse einer erfindungsgemäßen Knopfzelle ausgebildet sein wie das der in der WO 2012/048995 A1 beschriebenen Knopfzelle. In diesen Fällen kann wahlweise der in der WO 2012/048995 A1 dargestellte Zellenbecher (101) aus dem Stahl- oder Eisenblech bestehen und der Zellendeckel (102) aus dem Aluminium oder der Aluminiumlegierung oder umgekehrt.

In dem Verbund aus den Elektroden und dem mindestens einen Separator sind die Elektroden und der Separator bevorzugt in folgenden Sequenzen kombiniert:
- Separator / positive Elektrode / Separator / negative Elektrode oder
- Separator / negative Elektrode / Separator / positive Elektrode.

Knopfzellen mit derartigen Elektroden-Separator-Verbünden sind beispielsweise aus der DE 10 2010 033 577 A1 bekannt.

Besonders bevorzugt liegt der Elektroden-Separator-Wickel in einer erfindungsgemäßen Knopfzelle radial und/oder axial gepresst bzw. komprimiert vor.

Eine derartige Pressung bzw. Komprimierung kann beispielsweise realisiert werden, indem der Elektrodenwickel trocken in das becherförmige, positiv gepolte Gehäusehalbteil eingeführt wird, der Wickel mit Elektrolyt getränkt wird und das Knopfzellengehäuse verschlossen wird, beispielsweise durch Bördelung.

Zur Erzeugung der radialen Pressung wird der Durchmesser des Wickels möglichst exakt an den Durchmesser des positiv gepolten Gehäusehalbteils angepasst. In aller Regel schwillt der Wickel in Folge der Tränkung desselben mit Elektrolyt an. Hierbei tritt eine radiale Ausdehnung des Wickels auf, welche bei entsprechend exakter Abstimmung der genannten Durchmesser dazu führt, dass die umlaufende Außenseite des Wickels an die Becherwand des positiv gepolten Gehäusehalbteils gepresst wird und mit dieser die erwähnte Klemmzone ausbildet, in der der erste Stromableiter eingeklemmt ist.

Alternativ oder zusätzlich kann der Wickel auch mittels eines Wickelkerns radial von innen nach außen kraftbeaufschlagt werden.

Zur Erzeugung der axialen Pressung wird die Höhe des Wickels (der Abstand zwischen seinen beiden Stirnseiten) möglichst exakt an die Höhe des Knopfzellengehäuses (dem Abstand zwischen der Ober- und der dazu parallelen Unterseite) angepasst. In aller Regel schwillt der Wickel in Folge der Tränkung desselben mit Elektrolyt an. Hierbei tritt in axialer Richtung eine (im Vergleich zur erwähnten radialen Ausdehnung des Wickels geringfügige) Streckung des Wickels auf, welche jedoch bei entsprechend exakter Abstimmung der genannten Höhen dazu führt, dass auch die Stirnseiten des Wickels an die Ober- und die Unterseite des Gehäuses gepresst werden können.

Dieser Effekt kann genutzt werden um den oder die Stromkollektoren der mindestens einen negativen Elektrode zuverlässig mit dem negativ gepolten Gehäusehalbteil zu verbinden, ohne dass es eines Schweißvorgangs an dem Gehäusehalbteil bedarf.

So kann beispielsweise bei der Herstellung des Wickels eine bandförmige negative Elektrode mit einem beidseitig mit elektrochemischem Aktivmaterial beschichteten Stromkollektor eingesetzt werden, welcher einen unbeschichteten Längsrand aufweist. Dieser unbeschichtete Längsrand kann als zweiter metallischer Stromableiter dienen. Wird ein Verbund aus einem solchen Elektrodenband, einem Separator und einer geeigneten Gegenelektrode zu einem Wickel verarbeitet, so ragt der Längsrand (oder zumindest ein Teil des Längsrandes, falls dieser vor dem Wickeln beschnitten wurde) nach dem Wickeln stirnseitig (an einer Stirnseite) aus dem resultierenden Wickel heraus. Bei axialer Pressung kann der stirnseitig aus dem Wickel ragende Teil des Stromkollektors eine unmittelbare elektrische Verbindung zu dem an der Stirnseite anliegenden Boden des negativ gepolten Gehäusehalbteils herstellen. Hierzu muss der Wickel in dem becherförmigen, positiv gepolten Gehäusehalbteil natürlich derart angeordnet werden, dass die Stirnseite, aus der der unbeschichtete Längsrand herausragt, in Richtung der Becheröffnung und nicht in Richtung des Becherbodens des positiv gepolten Gehäusehalbteils weist.

Wenn man hingegen den zweiten metallischen Stromableiter mit dem negativ gepolten Gehäusehalbteil durch Verschweißung verbinden will, so ist eine hierfür geeignete Vorgehensweise in der bereits erwähnten WO 2010/146154 A2 beschrieben. Gemäß der beschriebenen Vorgehensweise wird ein Stromableiter senkrecht an das Kollektorband einer zu wickelnden Elektrode geschweißt. Nach dem Wickeln ragt er stirnseitig aus dem resultierenden Wickel heraus und wird durch Umklappen flach auf der Stirnseite abgelegt. Mit dem Gehäusehalbteil wird er bevorzugt durch Verschweißung verbunden. Dazu wird der Wickel in ein Gehäuse aus dem Gehäusehalbteil und einem dazu korrespondierenden Gegenstück eingesetzt. Die Verschweißung erfolgt nach dem Schließen des Gehäuses mittels eines Lasers von außen durch den Boden des Gehäusehalbteils hindurch.

Diese Vorgehensweise wäre auch vorliegend anwendbar. Gegebenenfalls kann allerdings das Anschweißen des Stromableiters an das Gehäusehalbteil unterbleiben, beispielsweise wenn die beschriebene axiale Pressung herbeigeführt wird.

Handelt es sich bei der erfindungsgemäßen Knopfzelle um eine Lithium-Ionen-Knopfzelle, so kommen als Elektrolyt im übrigen bevorzugt Lösungen von Lithiumsalzen wie Lithiumhexafluorophosphat in organischen Lösungsmitteln wie Ethern und Estern der Kohlensäure (organische Carbonate) zum Einsatz.

In einer besonders bevorzugten Ausführungsform ist das Gehäusehalbteil aus Aluminium oder der Aluminiumlegierung, insbesondere der Boden des Gehäusehalbteils, als Berstmembran ausgebildet. Hierzu kann es vorgesehen sein, dass das Gehäusehalbteil, insbesondere sein Boden, eine oder mehrere, bevorzugt zwei sich kreuzende, Schwächungslinien aufweist, entlang derer die Wandstärke des Gehäusehalbteils verringert ist. Diese Schwächungslinien bilden im Falle eines Druckanstiegs im Gehäuseinneren eine Sollberststelle, an der das Zellgehäuse aufreißen kann um kontrolliert Druck aus der Zelle entweichen zu lassen.

Große Vorteile ergeben sich bei entsprechender Zellkonfiguration insbesondere aus der elektrochemischen Stabilität des Aluminiums bzw. der Aluminiumlegierung gegenüber der Kathode (positiver Pol) sowie aus der mechanischen Verformbarkeit und damit hinsichtlich niedrigen Berstdruck gut einstellbaren Berstmembran. Der Nachteil der geringeren mechanischen Stabilität des Aluminiumhalbteils wird durch das Edelstahlhalbteil (negativer Pol) kompensiert. In Summe ergibt sich eine optimale elektrochemische und mechanische Stabilität der erfindungsgemäßen Zelle.

Die genannten und weitere Vorteile der Erfindung ergeben sich auch aus der nun folgenden Beschreibung der Zeichnungen in Verbindung mit den Unteransprüchen. Dabei können die einzelnen Merkmale der Erfindung für sich allein oder in Kombination miteinander verwirklicht sein. Die beschriebenen Ausführungsformen dienen lediglich zur Erläuterung und zum besseren Verständnis der Erfindung und sich in keiner Weise einschränkend zu verstehen.

Figurenbeschreibung
- Fig. 1: zeigt einen Querschnitt einer ersten Ausführungsform einer erfindungsgemäßen Knopfzelle (schematische Darstellung)
- Fig. 2: zeigt einen Querschnitt einer zweiten Ausführungsform einer erfindungsgemäßen Knopfzelle (schematische Darstellung)
- Fig. 3: zeigt einen Querschnitt des Gehäuses einer dritten Ausführungsform einer erfindungsgemäßen Knopfzelle (schematische Darstellung)

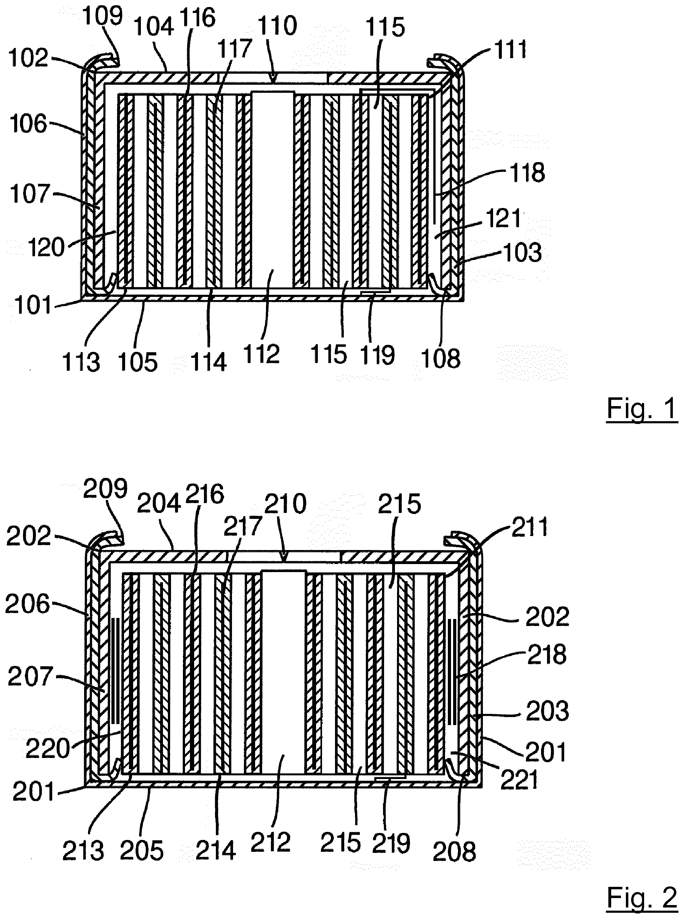

In **Fig. 1** sind das Gehäusehalbteil (101) und das Gehäusehalbteil (102) dargestellt. Das Gehäusehalbteil (102) ist positiv gepolt und besteht aus Aluminium. Das Gehäusehalbteil (101) besteht aus Edelstahl und ist negativ gepolt. Gemeinsam mit der Dichtung (103), die zwischen den beiden Gehäusehalbteilen (101) und (102) angeordnet ist und die Teile elektrisch isoliert, bilden sie ein zylindrisches, flüssigkeitsdicht verschlossenes Gehäuse aus.

Beide Gehäusehalbteile (101) und (102) sind becherförmig ausgebildet. Sie weisen jeweils einen kreisrunden Becherboden (104) und (105) sowie eine umlaufende Becherwand (106) und (107) auf. Die Böden (104) und (105) bilden die Ober- und die Unterseite des zylindrischen Gehäuses aus. Die umlaufende Becherwand (107) des Gehäusehalbteils (102) weist einen geringeren Innen- und Außenradius als die Becherwand (106) des Gehäusehalbteils (101) auf. Das Gehäusehalbteil (102) ist mit dem Becherrand (108) voran in das Gehäusehalbteil (101) so weit eingeschoben, dass der Becherrand (108) auf dem Boden (105) aufsitzt und ein direkter Kontakt mit dem Boden (105) nur durch die Dichtung (103) verhindert wird. Der Becherrand (109) des Gehäusehalbteils (101) ist radial nach innen umgebogen und sorgt für einen Formschluss in axialer Richtung. Ein Herausziehen des Gehäusehalbteils (102) aus dem Gehäusehalbteil (101) ist nicht möglich, ohne das Gehäusehalbteil (101) zu deformieren.

Innerhalb des Gehäuses ist der Elektroden-Separator-Wickel (111) angeordnet. Dieser besteht aus einer bandförmigen positiven Elektrode (113), einer bandförmigen negativen Elektrode (114) und einem zwischen den Elektroden angeordneten Separator (115). Die positive Elektrode (113) umfasst ein Band aus Aluminiumfolie (116) als ersten Stromkollektor. Die negative Elektrode (114) umfasst ein Band aus Kupferfolie (117) als zweiten Stromkollektor. Die positive Elektrode (113) ist über den metallischen Stromableiter (118) elektrisch mit dem Gehäusehalbteil (102) verbunden. Die negative Elektrode (114) ist über den metallischen Stromableiter (119) elektrisch mit dem Gehäusehalbteil (101) verbunden.

Die Elektroden (113) und (114) und der Separator (115) liegen als durch Lamination gebildeter Verbund vor. Der Verbund ist spiralförmig auf den Wickelkern (112) aufgewickelt. Der Wickel weist zwei Stirnseiten auf, die flach an den Böden (104) und (105) anliegen, sowie eine umlaufende Außenseite (120).

Der metallische Stromableiter (118) ist an den bandförmigen Stromkollektor (116) angeschweißt. Der metallische Stromableiter (119) ist an den bandförmigen Stromkollektor (117) angeschweißt. Die Stromableiter treten an den zwei Stirnseiten aus dem Wickel aus. Der Stromableiter (118) ist durch Umklappen auf der Außenseite (120) des Wickels (111) abgelegt. Diese bildet mit der Becherwand (107) eine Klemmzone (121) aus. Kommt es beispielsweise in Folge einer Elektrolytzugabe zu einer Schwellung des Wickels, verbunden mit einer radialen Ausdehnung, so wird der Stromableiter (118) gegen die Becherwand (107) gepresst und zwischen der Außenseite (120) und der Becherwand (107) eingeklemmt. Eine Verschweißung des Stromableiters (118) mit dem Gehäusehalbteil (102) ist dann bedingt durch diese Klemmkontaktierung nicht erforderlich (die Pressung des Wickels an die Becherwand ist aus Gründen der Übersichtlichkeit nicht dargestellt). Hingegen ist der Stromableiter (119) mit dem mit dem Gehäusehalbteil (101) durch Verschweißung im Bodenbereich (105) verbunden.

In den Boden (104) des Gehäusehalbteils (102) ist ein Berstkreuz (110) aus zwei sich kreuzenden Schwächungslinien eingearbeitet.

In **Fig. 2** sind das Gehäusehalbteil (201) und das Gehäusehalbteil (202) dargestellt. Das Gehäusehalbteil (202) ist positiv gepolt und besteht aus Aluminium. Das Gehäusehalbteil (201) besteht aus Edelstahl und ist negativ gepolt. Gemeinsam mit der Dichtung (203), die zwischen den beiden Gehäusehalbteilen (201) und (202) angeordnet ist und die Teile elektrisch isoliert, bilden sie ein zylindrisches, flüssigkeitsdicht verschlossenes Gehäuse aus.

Beide Gehäusehalbteile (201) und (202) sind becherförmig ausgebildet. Sie weisen jeweils einen kreisrunden Becherboden (204) und (205) sowie eine umlaufende Becherwand (206) und (207) auf. Die Böden (204) und (205) bilden die Ober- und die Unterseite des zylindrischen Gehäuses aus. Die umlaufende Becherwand (207) des Gehäusehalbteils (202) weist einen geringeren Innen- und Außenradius als die Becherwand (206) des Gehäusehalbteils (201) auf. Das Gehäusehalbteil (202) ist mit dem Becherrand (208) voran in das Gehäusehalbteil (201) so weit eingeschoben, dass der Becherrand (208) auf dem Boden (205) aufsitzt und ein direkter Kontakt mit dem Boden (205) nur durch die Dichtung (203) verhindert wird. Der Becherrand (209) des Gehäusehalbteils (201) ist radial nach innen umgebogen und sorgt für einen Formschluss in axialer Richtung. Ein Herausziehen des Gehäusehalbteils (202) aus dem Gehäusehalbteil (201) ist nicht möglich, ohne das Gehäusehalbteil (201) zu deformieren.

Innerhalb des Gehäuses ist der Elektroden-Separator-Wickel (211) angeordnet. Dieser besteht aus einer bandförmigen positiven Elektrode (213), einer bandförmigen negativen Elektrode (214) und einem zwischen den Elektroden angeordneten Separator (215). Die positive Elektrode (213) umfasst ein Band aus Aluminiumfolie (216) als ersten Stromkollektor. Die negative Elektrode (214) umfasst ein Band aus Kupferfolie (217) als zweiten Stromkollektor. Die positive Elektrode (213) ist über den metallischen Stromableiter (218) elektrisch mit dem Gehäusehalbteil (202) verbunden. Die negative Elektrode (214) ist über den metallischen Stromableiter (219) elektrisch mit dem Gehäusehalbteil (201) verbunden.

Die Elektroden (213) und (214) und der Separator (215) liegen als durch Lamination gebildeter Verbund vor. Der Verbund ist spiralförmig auf den Wickelkern (212) aufgewickelt. Der Wickel weist zwei Stirnseiten auf, die flach an den Böden (204) und (205) anliegen, sowie eine umlaufende Außenseite (220).

Bei dem metallischen Stromableiter (218) handelt es sich um einen nicht von elektrochemischem Aktivmaterial bedeckten endständigen Abschnitt des ersten Stromkollektors (216), der in zwei Windungen um den aufgewickelten Verbund herumgeführt ist und auf dessen Außenseite (220) aufliegt. Die Außenseite (220) bildet mit der Becherwand (207) eine Klemmzone (221) aus. Kommt es beispielsweise in Folge einer Elektrolytzugabe zu einer Schwellung des Wickels, verbunden mit einer radialen Ausdehnung, so wird der Stromableiter (218) gegen die Becherwand (207) gepresst und zwischen der Außenseite (220) und der Becherwand (207) eingeklemmt. Eine Verschweißung des Stromableiters (218) mit dem Gehäusehalbteil (202) ist dann bedingt durch diese Klemmkontaktierung nicht erforderlich (die Pressung des Wickels an die Becherwand ist aus Gründen der Übersichtlichkeit nicht dargestellt).

Der metallische Stromableiter (219) ist an den bandförmigen Stromkollektor (217) angeschweißt. Der Stromableiter (219) tritt an einer der zwei Stirnseiten aus dem Wickel (211) aus. Er ist mit dem mit dem Gehäusehalbteil (201) durch Verschweißung im Bodenbereich (205) verbunden.

In den Boden (204) des Gehäusehalbteils (202) ist ein Berstkreuz (210) aus zwei sich kreuzenden Schwächungslinien eingearbeitet.

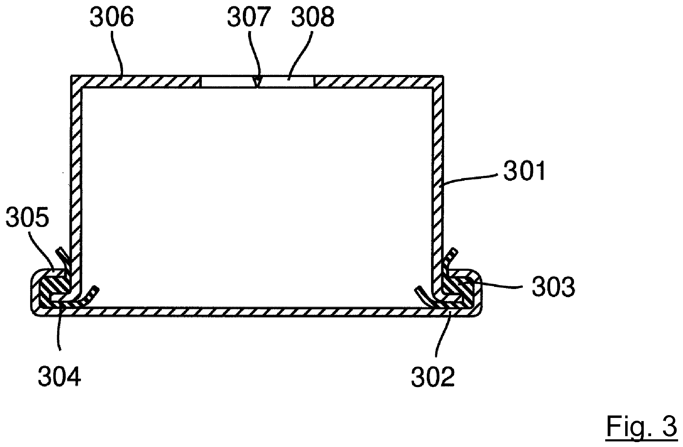

In **Fig. 3** ist das becherförmige Gehäusehalbteil (301) dargestellt. Dieses ist in das napfartig ausgebildete Gehäusehalbteil (302) eingesetzt. Das Gehäusehalbteil (301) besteht aus Aluminium, das Gehäusehalbteil (302) aus Edelstahl. Gemeinsam mit der Dichtung (303), die zwischen den beiden Gehäusehalbteilen angeordnet ist und die Teile elektrisch isoliert, bilden sie ein flüssigkeitsdicht verschlossenes Gehäuse aus.

Der Öffnungsrand (304) des Gehäusehalbteils (301) ist radial nach außen umgebogen, so dass das Gehäusehalbteil (301) in seiner Gesamtheit einen hutartigen Querschnitt aufweist (wobei der nach außen umgebogene Rand die Krempe des Hutes bildet). Der Rand (305) des Gehäusehalbteils (302) ist radial um den nach außen umgebogenen Öffnungsrand (304) des Gehäusehalbteils (301) umgeschlagen, so dass der Öffnungsrand (304) unter Ausbildung eines umlaufenden Flansches U-förmig vom Rand (305) umschlossen wird.

Nicht dargestellt sind die innerhalb des Gehäuses angeordneten Elektroden. Das Gehäuse eignet sich beispielsweise zur Aufnahme des in Fig. 1 dargestellten Elektroden-Separator-Wickels (111).

## Patentansprüche

1. Knopfzelle umfassend
• ein zylindrisches, flüssigkeitsdicht verschlossenes Gehäuse mit einer ebenen Gehäuseunterseite, einer dazu parallelen ebenen Gehäuseoberseite und einem dazwischen liegenden umlaufenden Gehäusemantel, sowie
• innerhalb des Gehäuses einen Verbund aus mindestens einer bandförmigen positiven, mindestens einer bandförmigen negativen Elektrode und mindestens einem bandförmigen Separator,
wobei
• das Gehäuse aus einem positiv gepolten und einem negativ gepolten metalischen Gehäusehalbteil besteht, die mittels einer elektrisch isolierenden Dichtung voneinander getrennt sind,
• die mindestens eine positive Elektrode einen ersten bandförmigen Stromkollektor umfasst, der von elektrochemischem Aktivmaterial bedeckt ist und über einen ersten metallischen Stromableiter mit dem positiv gepolten Gehäusehalbteil elektrisch verbunden ist,
• die mindestens eine negative Elektrode einen zweiten bandförmigen Stromkollektor umfasst, der von elektrochemischem Aktivmaterial bedeckt ist und über einen zweiten metallischen Stromableiter mit dem negativ gepolten Gehäusehalbteil elektrisch verbunden ist,
• der Verbund in Form eines spiralförmigen Wickels vorliegt, der zwei flache Stirnseiten sowie eine umlaufende Außenseite aufweist, und
• das positiv gepolte Gehäusehalbteil becherförmig ausgebildet ist und einen Becherboden, eine umlaufende Becherwand, einen Becherrand mit einer endständigen Schnittkante und eine von dem Becherrand definierte Becheröffnung aufweist,
**dadurch gekennzeichnet, dass**
der Wickel in dem becherförmigen, positiv gepolten Gehäusehalbteil angeordnet ist, so dass eine der flachen Stirnseiten in Richtung des Becherbodens weist und seine umlaufende Außenseite an der umlaufenden Becherwand anliegt und die Außenseite mit der Becherwand eine Klemmzone ausbildet, in der der erste Stromableiter eingeklemmt ist.

2. Knopfzelle nach Anspruch 1, **dadurch gekennzeichnet, dass** das positiv gepolte Gehäusehalbteil aus Aluminium oder aus einer Aluminiumlegierung und das negativ gepolte Gehäusehalbteil aus Stahl- oder Eisenblech besteht.

3. Knopfzelle nach Anspruch 1 oder Anspruch 2, **dadurch gekennzeichnet, dass** der erste Stromableiter aus Aluminium oder einer Aluminiumlegierung besteht.

4. Knopfzelle nach einem der vorhergehenden Ansprüche, **dadurch gekennzeichnet, dass** es sich bei dem ersten Stromableiter um einen (bevorzugt endständigen) nicht von elektrochemischem Aktivmaterial bedeckten Teilbereich des ersten Stromkollektors handelt.

5. Knopfzelle nach einem der vorhergehenden Ansprüche, **dadurch gekennzeichnet, dass** das negativ gepolte Gehäusehalbteil becherförmig ausgebildet ist und einen Becherboden, eine umlaufende Becherwand, einen Becherrand mit einer endständigen Schnittkante und eine von dem Becherrand definierte Becheröffnung aufweist.

6. Knopfzelle nach Anspruch 5, **dadurch gekennzeichnet, dass** das positiv gepolte Gehäusehalbteil mit seinem Becherrand voran in das becherförmige negativ gepolte Gehäusehalbteil aus Stahl- oder Eisenblech eingeschoben ist.

7. Knopfzelle nach einem der Ansprüche 1 bis 4, **dadurch gekennzeichnet, dass** das negativ gepolte Gehäusehalbteil napfförmig ausgebildet ist und einen Boden sowie einen Rand mit einer endständigen Schnittkante aufweist.

8. Knopfzelle nach Anspruch 7, **dadurch gekennzeichnet, dass** das becherförmige positiv gepolte Gehäusehalbteil mit dem Becherrand voran auf dem Boden des napfförmigen negativ gepolten Gehäusehalbteils aufsitzt.

9. Knopfzelle nach einem der vorhergehenden Ansprüche, **dadurch gekennzeichnet, dass** zwischen den beiden Gehäusehalbteilen des flüssigkeitsdicht verschlossenen Gehäuses eine formschlüssige Verbindung besteht.

10. Knopfzelle nach Anspruch 9, **dadurch gekennzeichnet, dass** der Formschluss dadurch realisiert ist, dass der Rand des becher- oder napfförmigen Gehäusehalbteils aus Stahl- oder Eisenblech radial nach innen umgebogen ist

11. Knopfzelle nach einem der vorhergehenden Ansprüche, **dadurch gekennzeichnet, dass** der Wickel mittels eines Wickelkerns radial von innen nach außen kraftbeaufschlagt ist.

12. Knopfzelle nach einem der vorhergehenden Ansprüche, **dadurch gekennzeichnet, dass** der Wickel radial und/oder axial gepresst bzw. komprimiert vorliegt.

13. Knopfzelle nach einem der vorhergehenden Ansprüche, **dadurch gekennzeichnet, dass** das positiv gepolte Gehäusehalbteil, insbesondere der Boden des Gehäusehalbteils, als Berstmembran ausgebildet ist.

## Claims

1. Button cell comprising
• a cylindrical housing which is closed in a liquid-tight manner and has a planar housing bottom side, a planar housing top side parallel thereto and a circumferential housing casing lying therebetween, and also
• an assembly of at least one strip-shaped positive electrode, at least one strip-shaped negative electrode and at least one strip-shaped separator within the housing,
wherein
• the housing consists of a positive-polarity and a negative-polarity metallic housing half, which are separated from one another by means of an electrically insulating seal,
• the at least one positive electrode comprises a first strip-shaped current collector, which is covered by electrochemical active material and is electrically connected to the positive-polarity housing half via a first metallic current output conductor,
• the at least one negative electrode comprises a second strip-shaped current collector, which is covered by electrochemical active material and is electrically connected to the negative-polarity housing half via a second metallic current output conductor,
• the assembly is present in the form of a spiral-shaped winding, which has two flat end sides and a circumferential outer side, and
• the positive-polarity housing half has a cup-shaped form and has a cup base, a circumferential cup wall, a cup rim with a terminal cutting edge and a cup opening defined by the cup rim,
**characterized in that**
the winding is arranged in the cup-shaped, positive-polarity housing half, such that one of the flat end sides points in the direction of the cup base, the circumferential outer side thereof bears against the circumferential cup wall and the outer side together with the cup wall forms a clamping zone, in which the first current output conductor is clamped.

2. Button cell according to Claim 1, **characterized in that** the positive-polarity housing half consists of aluminum or of an aluminum alloy and the negative-polarity housing half consists of sheet steel or sheet iron.

3. Button cell according to Claim 1 or Claim 2, **characterized in that** the first current output conductor consists of aluminum or an aluminum alloy.

4. Button cell according to one of the preceding claims, **characterized in that** the first current output conductor is a (preferably terminal) partial region of the first current collector which is not covered by electrochemical active material.

5. Button cell according to one of the preceding claims, **characterized in that** the negative-polarity housing half has a cup-shaped form and has a cup base, a circumferential cup wall, a cup rim with a terminal cutting edge and a cup opening defined by the cup rim.

6. Button cell according to Claim 5, **characterized in that** the positive-polarity housing half is pushed with the cup rim thereof to the fore into the cup-shaped negative-polarity housing half made of sheet steel or sheet iron.

7. Button cell according to one of Claims 1 to 4, **characterized in that** the negative-polarity housing half has a pan-shaped form and has a base and also a rim with a terminal cutting edge.

8. Button cell according to Claim 7, **characterized in that** the cup-shaped positive-polarity housing half sits with the cup rim to the fore on the base of the pan-shaped negative-polarity housing half.

9. Button cell according to one of the preceding claims, **characterized in that** there is a form-fitting connection between the two housing halves of the housing closed in a liquid-tight manner.

10. Button cell according to Claim 9, **characterized in that** the form fit is realized by virtue of the fact that the rim of the cup-shaped or pan-shaped housing half made of sheet steel or sheet iron is bent radially inward.

11. Button cell according to one of the preceding claims, **characterized in that** a force is applied to the winding radially from the inside outward by means of a winding core.

12. Button cell according to one of the preceding claims, **characterized in that** the winding is present in a radially and/or axially pressed or compressed form.

13. Button cell according to one of the preceding claims, **characterized in that** the positive-polarity housing half, in particular the base of the housing half, is in the form of a rupture membrane.

## Revendications

1. Pile bouton comprenant
• un boîtier cylindrique, fermé de façon étanche au liquide, avec un côté inférieur de boîtier plan, un côté supérieur de boîtier plan parallèle à celui-ci et une enveloppe de boîtier périphérique située entre ceux-ci, ainsi que
• à l'intérieur du boîtier un composite composé d'au moins une électrode positive en forme de bande, d'au moins une électrode négative en forme de bande et d'au moins un séparateur en forme de bande,
dans laquelle
• le boîtier se compose d'un demi-boîtier métallique à polarité positive et d'un demi-boîtier métallique à polarité négative, qui sont séparés l'un de l'autre au moyen d'un joint électriquement isolant,
• ladite au moins une électrode positive comprend un premier collecteur de courant en forme de bande, qui est recouvert de matériau actif électrochimique et qui est électriquement relié au demi-boîtier à polarité positive par un premier conducteur de courant métallique,
• ladite au moins une électrode négative comprend un second collecteur de courant en forme de bande, qui est recouvert de matériau actif électrochimique et qui est électriquement relié au demi-boîtier à polarité négative par un second conducteur de courant métallique,
• le composite se présente sous la forme d'un enroulement en spirale, qui présente deux côtés frontaux plats ainsi qu'un côté extérieur périphérique, et
• le demi-boîtier à polarité positive est réalisé en forme de gobelet et présente un fond de gobelet, une paroi de gobelet périphérique, un bord de gobelet avec une arête de coupe terminale et une ouverture de gobelet définie par le bord de gobelet,
**caractérisée en ce que** l'enroulement est disposé dans le demi-boîtier en forme de gobelet à polarité positive, de telle manière qu'un des côtés frontaux plats soit orienté en direction du fond de gobelet et que son côté extérieur périphérique s'applique sur le bord de gobelet périphérique et que le côté extérieur forme avec la paroi de gobelet une zone de serrage, dans laquelle le premier conducteur de courant est serré.

2. Pile bouton selon la revendication 1, **caractérisée en ce que** le demi-boîtier à polarité positive se compose d'aluminium ou d'un alliage d'aluminium et le demi-boîtier à polarité négative se compose d'une tôle d'acier ou de fer.

3. Pile bouton selon la revendication 1 ou la revendication 2, **caractérisée en ce que** le premier conducteur de courant se compose d'aluminium ou d'un alliage d'aluminium.

4. Pile bouton selon l'une quelconque des revendications précédentes, **caractérisée en ce que** le premier conducteur de courant est une région partielle (de préférence terminale) du premier collecteur de courant non recouverte de matériau actif électrochimique.

5. Pile bouton selon l'une quelconque des revendications précédentes, **caractérisée en ce que** le demi-boîtier à polarité négative est réalisé en forme de gobelet et présente un fond de gobelet, une paroi de gobelet périphérique, un bord de gobelet avec une arête de coupe terminale et une ouverture de gobelet définie par le bord de gobelet.

6. Pile bouton selon la revendication 5, **caractérisée en ce que** le demi-boîtier à polarité positive est inséré avec son bord de gobelet en avant dans le demi-boîtier à polarité négative en tôle d'acier ou de fer.

7. Pile bouton selon l'une quelconque des revendications 1 à 4, **caractérisée en ce que** le demi-boîtier à polarité négative est réalisé en forme de godet et présente un fond ainsi qu'un bord avec une arête de coupe terminale.

8. Pile bouton selon la revendication 7, **caractérisée en ce que** le demi-boîtier à polarité positive en forme de gobelet s'applique avec le bord de gobelet en avant sur le fond du demi-boîtier à polarité négative en forme de godet.

9. Pile bouton selon l'une quelconque des revendications précédentes, **caractérisée en ce qu'**il existe un assemblage par emboîtement entre les deux demi-boîtiers du boîtier fermé de façon étanche au liquide.

10. Pile bouton selon la revendication 9, **caractérisée en ce que** l'emboîtement est réalisé par le fait que le bord du demi-boîtier en forme de gobelet ou en forme de godet en tôle d'acier ou de fer est replié radialement vers l'intérieur.

11. Pile bouton selon l'une quelconque des revendications précédentes, **caractérisée en ce que** l'enroulement est soumis à une force radialement de l'intérieur vers l'extérieur au moyen d'un noyau d'enroulement.

12. Pile bouton selon l'une quelconque des revendications précédentes, **caractérisée en ce que** l'enroulement se trouve sous forme pressée ou comprimée radialement et/ou axialement.

13. Pile bouton selon l'une quelconque des revendications précédentes, **caractérisée en ce que** le demi-boîtier à polarité positive, en particulier le fond du demi-boîtier, est réalisé sous forme de membrane de rupture.
